(19) Europäisches Patentamt
European Patent Office
Office européen des brevets

(11) **EP 1 102 464 A1**

(12) **EUROPÄISCHE PATENTANMELDUNG**

(43) Veröffentlichungstag:
**23.05.2001 Patentblatt 2001/21**

(51) Int Cl.⁷: **H04M 15/30, H04M 1/82**

(21) Anmeldenummer: **99122714.1**

(22) Anmeldetag: **16.11.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **SIEMENS AKTIENGESELLSCHAFT
80333 München (DE)**

(72) Erfinder:
• **Leffler, Christian
  90766 Fürth (DE)**
• **Conrad, Guido
  97230 Estenfeld (DE)**
• **Brummer, Wolfgang
  90425 Nürnberg (DE)**

(54) **Kommunikationsendgerät mit dezentraler Gebührenerfassung**

(57)  Das Kommunikationsendgerät (6) ist zur Abwicklung von Kommunikationsverbindungen an einer Kommunikationsleitung (1) angeschlossen. Es weist auf erste Mittel, welche zumindest eine, den Zustand der Kommunikationsleitung kennzeichnende Signalisierung empfangen, zweite Mittel, welche aus der mindestens einen Signalisierung den Beginn einer Kommunikationsverbindung detektieren, dritte Mittel, welche das Ende einer Kommunikationsverbindung detektieren, und vierte Mittel, welche die durch eine Kommunikationsverbindung verursachten Gebühren ermitteln, indem aus dem Ende und dem Start einer Kommunikationsverbindung deren Dauer bestimmt und mit einer vorgegebenen Gebühreneinheit bewertet wird. Vorteilhaft detektieren die dritten Mittel das Ende einer Kommunikationsverbindung ebenfalls durch Auswertung von zumindest einer Signalisierung. Vorteilhaft empfangen die ersten Mittel "Belegung" und "Frei" Signalisierungen.

Figur 7

**Beschreibung**

Bei der Nutzung von Kommunikationsleitungen mit Kommunikationsendgeräten, z.B. bei der Nutzung eines Telefonnetzes mit einem Telefon oder Telefaxgerät bzw. der Nutzung einer Internetleitung über eine entsprechende Schnittstellenkarte in einem Computer, fallen üblicherweise Gebühren für jede Kommunikationsverbindung an. Bei diesen Kommunikationsverbindungen können z.B. Sprache und/oder Daten zwischen den Kommunikationsendgeräten über die Kommunikationsleitungen ausgetauscht werden. Zum Zwecke von deren Ermittlung können auf der Kommunikationsleitung z.B. spezielle Gebührenimpulse oder digitale Gebühreninformationen zur Verfügung gestellt werden. Diese können z.B. in einer Telekommunikationsanlage zum Zwecke einer zentralen Erfassung der Gebühren, welche bei jedem Verbindungsaufbau eines Kommunikationsendgerätes mit der Kommunikationsleitung anfallen, verwendet werden.

Es kann aber der Fall eintreten, dass keine zentrale Gebührenerfassung z.B. in einer Telekommunikationsanlage, sondern eine dezentrale Gebührenerfassung in jedem Kommunikationsendgerät erforderlich ist. Dies kann z.B. bei besonderen Anwendungsfällen z.B. in privaten oder regional bzw. lokal begrenzten Netzen z.B. in öffentlichen Einrichtungen der Fall sein. Ein besonderer Anwendungsfall dieser Art ist beispielhaft die Gebührenerfassung der Kommunikationsverbindungen von Kommunikationsendgeräten, welche an Patientenbetten in Krankenhäusern platziert sind. Um auch in einem solchen Fall Gebühren dezentral erfassen und gegebenenfalls auch direkt abrechnen zu können, sind besondere Maßnahmen erforderlich.

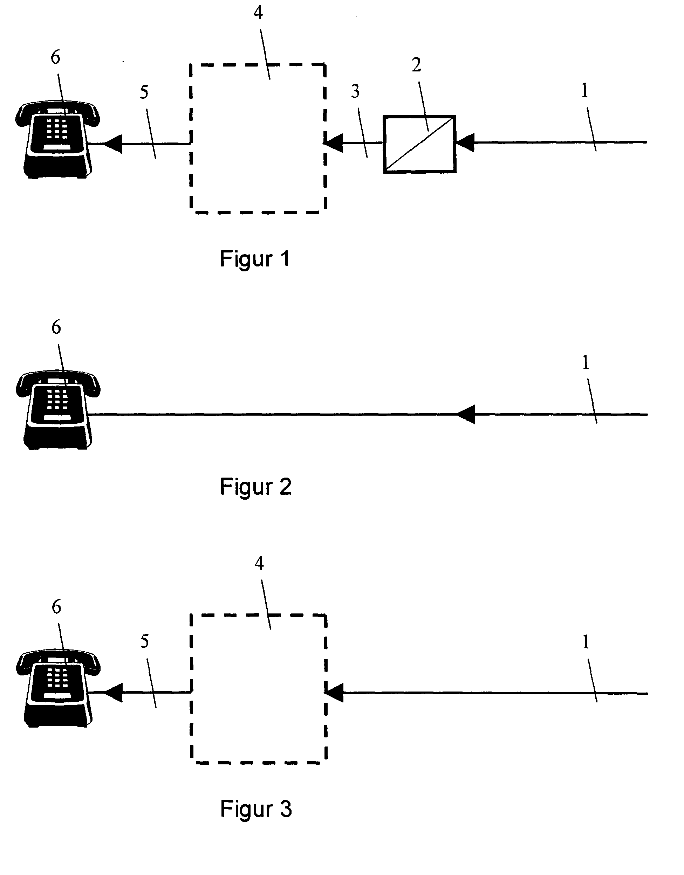

In Figur 1 ist eine bekannte Anordnung beispielhaft gezeigt. Dabei dient eine Kommunikationsleitung 1 z.B. als ein Anschluss an eine Telekom-Amtsleitung. Auf dieser Kommunikationsleitung werden Gebührenimpulse, welche z.B. in einem Frequenzbereich von 16 kHz liegen können, oder digitale Gebühreninformationen, z.B. in Form von sogenannten ISDN Gebühreninformationen, bereitgestellt. An die Kommunikationsleitung 1 ist beispielhaft ein Kommunikationsendgerät 6 angeschlossen, welches eine dezentrale, lokale Gebührenerfassung und gegebenenfalls auch Abrechnung ermöglicht. Dabei kann es sich beispielhaft um ein Telefon handeln, in das ein Chipkarte integrierbar ist, von der Gebühreneinheiten abbuchbar sind. Im Beispiel der Figur 1 erfolgt der Anschluss des Kommunikationsendgeräts 6 über eine zwischengeschaltete Telekommunikationsanlage 4. Diese weist beispielhaft einen analogen Nebenstellenanschluss auf, an den das Kommunikationsendgerät 6 über Zuleitungen 5 angeschlossen ist.

Zur Ermöglichung einer dezentralen Gebührenerfassung und gegebenenfalls auch Verarbeitung ist bei der bekannten Anordnung von Figur 1 eine zusätzliche Vorschalteinheit 2 in die Amtsleitung 1 geschaltet.

Diese Vorschalteinheit 2 empfängt die Gebührenimpulse oder ISDN-Gebühreninformationen von der Amtsleitung und konvertiert diese in zusätzliche Gebührenimpulse, welche im hörbaren Sprachband liegen, z.B. in einem Frequenzbereich von etwa 3,2 kHz. Diese zusätzlichen Gebührenimpulse werden über die Zuleitung 3, die zwischengeschaltete Telekommunikationsanlage 4 und die Zuleitungen 5 bis zum Kommunikationsendgerät 6 übertragen. Dort werden die im hörbaren Sprachband liegenden zusätzlichen Gebührenimpulse empfangen und zur Steuerung der Abbuchung von Gebühren beispielsweise von einer Wertkarte bzw. Chipkarte benutzt, die in das Kommunikationsendgerät 6 eingeschoben ist.

Die in Figur 1 dargestellte Anordnung weist Nachteile auf. Ein Nachteil wird darin gesehen, dass die von der Vorschalteinheit zusätzlich eingespeisten Gebührenimpulse im hörbaren Sprachband liegen und somit von Nutzern des Kommunikationsendgerätes 6 wahrnehmbar sind. Diese könnten dadurch gestört werden. Ein weiterer Nachteil wird darin gesehen, dass zur Erzeugung der zusätzlichen Gebührenimpulse einerseits eine zusätzliche Vorschalteinheit 2, und andererseits Gebührenimpulse oder digitale Gebühreninformationen auf der jeweiligen Kommunikationsleitung 1 zur Steuerung der Vorschalteinheit 2 erforderlich sind. Dies ist zum einen aufwendig. Zum anderen kann der Fall auftreten, dass derartige Gebührentaktsignale oder digitale Gebühreninformationen nicht auf jeder Kommunikationsleitung zur Verfügung gestellt werden.

Der Erfindung liegt die Aufgabe zugrunde, eine Anordnung anzugeben, bei der eine dezentrale Gebührenerfassung möglich ist und bei der die oben geschilderten Probleme vermieden werden können.

Die Aufgabe wird gelöst mit dem im Anspruch 1 angegebenen Kommunikationsendgerät. Erfindungsgemäß erfolgt dabei eine dezentrale Erfassung der Gebühren im Kommunikationsendgerät selbst, indem die Dauern von gebührenpflichtigen Kommunikationsverbindungen des Kommunikationsendgerätes mit der Kommunikationsleitung erfasst und mit Gebührenwerten bewertet werden. Für die Ermittlung der Dauern von gebührenpflichtigen Kommunikationsverbindungen wird im erfindungsgemäßen Kommunikationsendgerät der Beginn und das Ende einer jeden Kommunikationsverbindung erfasst. Dabei erfolgt zumindest die Erfassung des Beginns einer Kommunikationsverbindung durch Auswertung von Signalisierungen, welche den Zustand der Kommunikationsleitung kennzeichnen. Als Signalisierungen, welche den Zustand der Kommunikationsleitung kennzeichnen, sind besonders geeignet sogenannte "Belegung" und "Frei" Signalisierungen auf der Kommunikationsleitung. Auch die Erfassung des Endes einer Kommunikationsverbindung kann durch Auswertung von derartigen Signalisierungen auf der Kommunikationsverbindung erfolgen.

Bei einer anderen Ausführung kann das Ende einer Kommunikationsverbindung vom Kommunikationsendgerät auch dadurch erfasst werden, dass vom Kommunikationsendgerät selbst erzeugte Schaltsignale ausgewertet werden. Schaltsignale, welche das Ende einer Kommunikationsverbindung kennzeichnen, können beispielsweise von einem sogenannten Gabelkontakt des Kommunikationsendgerätes abgeleitet werden. Handelt es sich bei dem Kommunikationsendgerät beispielsweise um ein Telefon, so kann durch einen Gabelkontakt das Aufliegen oder Nichtaufliegen eines Hörers signalisiert werden.

Mit der Erfassung des Beginns und des Endes einer Kommunikationsverbindung ist die Bestimmung von deren Dauer und folglich der durch die Kommunikationsverbindung verursachten Gebühren dezentral im Kommunikationsendgerät möglich.

Der wesentliche Vorteil des erfindungsgemäßen Kommunikationsendgerätes wird darin gesehen, dass eine dezentrale Gebührenerfassung unabhängig davon ist, ob auf der Kommunikationsleitung Gebührenimpulse oder ISDN-Gebühreninformationen zur Verfügung stehen oder nicht. Falls trotzdem Gebührenimpulse oder entsprechende digitale Informationen zur Verfügung stehen, kann z.B. in einer vorgeschalteten Telekommunikationsanlage parallel und unabhängig von der dezentralen Gebührenerfassung in den Kommunikationsendgeräten eine zentrale Gebührenerfassung unter Nutzung von Gebührenimpulsen durchgeführt werden, deren Ergebnisse andersartig nutzbar sind.

Weitere vorteilhafte Ausgestaltungen der erfindungsgemäßen Vorrichtung sind in den Unteransprüchen enthalten.

Die Erfindung wird an Hand der nachfolgend kurz angegebenen Figuren näher erläutert. Dabei zeigt

Figur 1: eine bekannt Anordnung zur dezentralen Gebührenermittlung in einem Kommunikationsendgerät, bei der zusätzliche Gebührenimpulse ausgewertet werden, die von einer Vorschalteinheit zusätzlich in die Leitungen eingespeist werden,

Figur 2: ein Kommunikationsendgerät gemäß der Erfindung, welches direkt an eine Kommunikationsleitung angeschlossen ist,

Figur 3: ein Kommunikationsendgerät gemäß der Erfindung, welches über eine zwischengeschaltete, zusätzliche Telekommunikationsanlage indirekt an eine Kommunikationsleitung angeschlossen ist,

Figur 4: eine auf einer Kommunikationsleitung bereitgestellte, den Zustand "Belegung" kennzeichnende Signalisierung,

Figur 5: eine auf einer Kommunikationsleitung bereitgestellte, den Zustand "Frei" kennzeichnende Signalisierung, und

Figur 6: ein erstes Zeitdiagramm, bei dem nach Absetzen einer Wahl eine Signalisierung für "Belegung" vom erfindungsgemäßen Kommunikationsendgerät detektiert wird,

Figur 7: ein zweites Zeitdiagramm, bei dem nach Absetzen einer Wahl eine Signalisierung für "Frei" vom erfindungsgemäßen Kommunikationsendgerät detektiert wird und sich danach ein Gesprächsbeginn ereignet,

Figur 8: ein drittes Zeitdiagramm, bei dem nach Absetzen einer Wahl vom erfindungsgemäßen Kommunikationsendgerät zunächst eine Signalisierung für "Frei", danach aber eine Signalisierung für "Belegung" detektiert wird, und

Figur 9: ein viertes Zeitdiagramm, bei dem nach Absetzen einer Wahl sich unmittelbar ein Gesprächsbeginn ereignet und das Gesprächsende durch eine Signalisierung für "Frei" vom erfindungsgemäßen Kommunikationsendgerät detektiert wird.

Figur 2 zeigt beispielhaft eine erste Ausführung der Erfindung, wobei ein erfindungsgemäßes Kommunikationsendgerät direkt an eine Kommunikationsleitung angeschlossen ist. Die Kommunikationsleitung stellt zumindest Belegungs- und Freigabesignale bereit, welche zusätzlich zu Schaltsignalen im Kommunikationsendgerät zur Verbindungsdauer- und damit Gebührenerfassung ausgewertet werden.

Figur 3 zeigt beispielhaft eine weitere Ausführung der Erfindung, wobei ein erfindungsgemäßes Kommunikationsendgerät über eine zwischengeschaltete, zusätzliche Telekommunikationsanlage indirekt an eine Kommunikationsleitung angeschlossen ist. Die Kommunikationsleitung stellt zumindest Belegungs- und Freigabesignale bereit, welche durch die Telekommunikationsanlage bis zum Kommunikationsendgerät durchgeschleift und gemeinsam mit zusätzlichen Schaltsignalen im Kommunikationsendgerät zur Verbindungsdauer- und damit Gebührenerfassung ausgewertet werden.

Das in den Figuren 2 und 3 gezeigte erfindungsgemäße Kommunikationsendgerät kann vorteilhaft zusätzliche Möglichkeiten aufweisen, um die ermittelten Gebühren unmittelbar abzubuchen, z.B. von einer einsteckbaren Chip- oder Wertkarte.

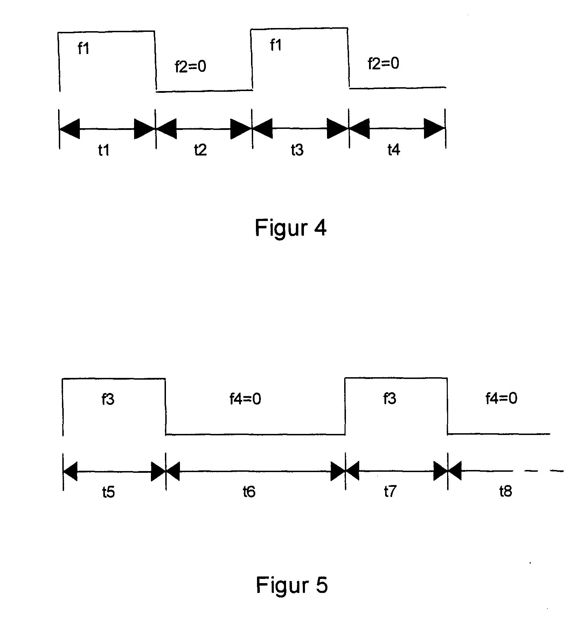

Figur 4 zeigt beispielhaft eine mögliche, auf der Kommunikationsleitung bereitgestellte Signalisierung, welche den Zustand "Belegung" der Kommunikationsleitung kennzeichnet. In diesem Fall kann mit dem Kommunikationsendgerät vorübergehend keine Kommunikationsverbindung mit der Kommunikationsleitung aufgebaut werden. Die im Beispiel der Signalisierung von Figur 4 enthaltenen Zeiträume und Frequenzen haben die folgenden Bedeutungen und beispielhaften Werte :

| f1 | Frequenz eines Signaltons bei Signalisierung "Belegung" |
|---|---|
| t1 = t3 | Dauer eines Signaltons bei Signalisierung "Belegung" |
| f2 | Frequenz bei Pause |
| t2 = t4 | Dauer einer Pause bei Signalisierung "Belegung" |

Die obigen Größen können beispielsweise die folgenden Werte annehmen :

f1 = 425 Hz
t1 = t3 = 200 ms
f2 = 0 Hz
t2 = t4 = 200 ms

Figur 5 zeigt beispielhaft eine mögliche, auf der Kommunikationsleitung bereitgestellte Signalisierung, welche den Zustand "Frei" der Kommunikationsleitung kennzeichnet. In diesem Fall ist es möglich, mit dem Kommunikationsendgerät eine Kommunikationsverbindung mit der Kommunikationsleitung aufbauen. Die im Beispiel der Signalisierung von Figur 4 enthaltenen Zeiträume und Frequenzen haben die folgenden Bedeutungen und beispielhaften Werte :

| f3 | Frequenz eines Signaltons bei Signalisierung "Frei" |
|---|---|
| t5 = t7 | Dauer eines Signaltons bei Signalisierung "Frei" |
| f4 | Frequenz bei Pause |
| t6 = t7 | Dauer einer Pause bei Signalisierung "Frei" |

Die obigen Größen können beispielsweise die folgenden Werte annehmen :

f3 = 425 Hz
t5 = t7 = 1000 ms
f4 = 0 Hz
t6 = t8 = 4000ms

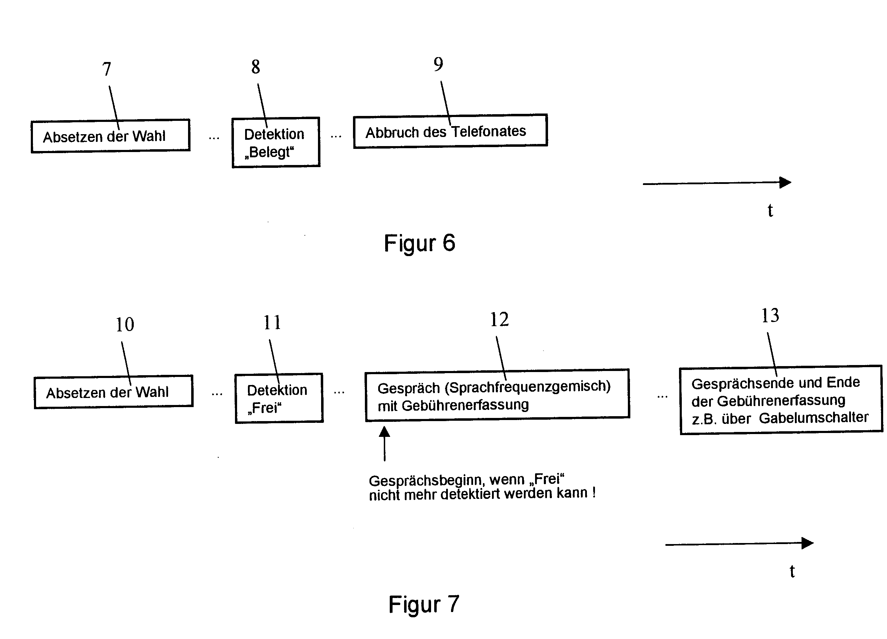

Zum Zwecke der weiteren Erläuterung der Erfindung, vorteilhafter, weiterer Ausführungsformen und der Beispiele in den Figuren 6 bis 8 soll nachfolgend beispielhaft davon ausgegangen werden, dass die in den Figuren 4 und 5 gezeigten Signalisierungen von einer Kommunikationszentrale, z.B. ein sogenanntes Amt, über eine Kommunikationsleitung an ein erfindungsgemäßes Kommunikationsendgerät übermittelt werden.

Eine einzelne Gebührenerfassung wird in der Regel dadurch eingeleitet, dass eine Zahlenkombination, z.B. eine Rufnummer, mit Hilfe des Kommunikationsendgeräts in die Kommunikationsleitung eingespeist wird. Dieser Vorgang wird desweiteren als "Absetzen einer Wahl" bezeichnet. Stellt das Kommunikationsendgerät beispielhaft ein Telefon dar, so wird die Zahlenkombination von einer Person als Rufnummer eingegeben. Nach Absetzen einer Wahl wird im Kommunikationsendgerät die Zustandsauswertung der aus der Kommunikationsleitung empfangenen Signalisierungen gestartet. Dabei können Signalisierungen empfangen werden, wie sie beispielhaft in den Figuren 4 und 5 dargestellt sind.

Die Signalisierung eines bestimmten Zustandes der Kommunikationsleitung kann beispielsweise aus einer zyklischen Folge von Signaltönen mit einer festgelegten Frequenz im hörbaren Sprachband und Pausenfrequenz mit f = 0, oder einer anderen, von der Frequenz der Signaltöne unterschiedlichen Frequenz, bestehen. Der aktuelle Zustand der Kommunikationsleitung ist somit durch die Dauer der Signaltöne und der Frequenzpausen einer Signalisierung, und gegebenenfalls zusätzlich oder ausschließlich durch die Frequenz der Signaltöne charakterisiert. Die Signalisierungen können sich länderspezifisch in Frequenz des Signaltons, Dauer des Signaltons und Dauer der Frequenzpausen zwischen den Signaltönen unterscheiden.

Besonders vorteilhaft kann die Erfassung z.B. der Zustände "Belegung" und "Frei" einer Kommunikationsleitung durch eine Auswertung von Frequenzen der Signaltöne und Pausenzeiten der dazugehörigen Signalisierungen erfolgen. Beispielsweise kann die Signalisierung für "Belegung" erkannt werden z.B. bei Auftreten von mindestens einer Folge aus einem Signalton und einer Pausenfrequenz gemäß Figur 4, d.h. bei

$$f1 \times t1 \quad \cap \quad f2 \times t2 \ .$$

In diesem Beispiel wird somit das Vorliegen des Zustandes "Belegung" dann erkannt, wenn ein erster Signalton mit einer ersten Frequenz fl für eine erste Zeitdauer tl und anschließend ein zweiter Signalton mit einer zweiten Frequenz für eine zweite Zeitdauer t2, erfasst werden können. Dabei kann die zweite Frequenz eine Pausenfrequenz darstellen, d.h. in Figur 4 z.B. f2=0.

Entsprechend kann die Signalisierung für "Frei" erkannt werden z.B. bei Auftreten von mindestens einer Folge aus einem Signalton und einer Pausenfrequenz gemäß Figur 5, d.h. bei

$$f3 \times t5 \quad \cap \quad f4 \times t6 \ .$$

In entsprechender Weise wird in diesem Beispiel somit das Vorliegen des Zustandes "Frei" dann erkannt, wenn ein dritter Signalton mit einer dritten Frequenz f3 für eine fünfte Zeitdauer t5 und anschließend ein vierter Signalton mit einer vierten Frequenz f4 für eine sechste Zeitdauer t6 erfasst werden können. Dabei kann die vierte Frequenz wiederum eine Pausenfrequenz darstellen, d.h. in Figur 5 z.B. f4=0.

Zur Verbesserung der Erfassungssicherheit kann jeweils das weitere Auftreten eines weiteren Signaltons erfasst werden. Bei einer Signalisierung für "Belegung" bedeutet dies

$$f1 \times t1 \quad \cap \quad f2 \times t2 \quad \cap \quad f1 \times t3 .$$

In diesem Beispiel wird somit das Vorliegen des Zustandes "Belegung" dann erkannt, wenn ein erster Signalton mit einer ersten Frequenz fl für eine erste Zeitdauer tl und anschließend ein zweiter Signalton mit einer zweiten Frequenz f2, d.h. bevorzugt eine Frequenzpause, für eine zweite Zeitdauer t2, und schließlich nochmals ein weiterer Signalton mit der ersten Frequenz fl für eine dritte Zeitdauer t3 erfasst werden können. Dabei können die Zeitdauern t1 und t2 gleich sein.

Bei einer Signalisierung für "Frei" bedeutet dies

$$f3 \times t5 \quad \cap \quad f4 \times t6 \quad \cap \quad f3 \times t7 .$$

In entsprechender Weise wird in diesem Beispiel somit das Vorliegen des Zustandes "Frei" dann erkannt, wenn ein dritter Signalton mit einer dritten Frequenz f3 für eine fünfte Zeitdauer t5, und anschließend ein vierter Signalton mit einer vierten Frequenz f4, d.h. bevorzugt eine Frequenzpause, für eine sechste Zeitdauer t6, und schließlich nochmals ein weiterer Signalton mit der dritten Frequenz f3 für eine siebte Zeitdauer t7 erfasst werden können.

Mit Hilfe der in den Figuren 6 bis 9 dargestellten Zeitdiagramme sollen nachfolgend mögliche Abläufe der Gebührenerfassung gemäß der Erfindung am Beispiel eines als erfindungsgemäßes Kommunikationsendgerät dienenden Telefons erläutert werden.

Figur 6 zeigt den Fall, dass nach Absetzen einer Wahl 7 durch das erfindungsgemäße Kommunikationsendgerät der Zustand "Belegung" durch Erfassung einer entsprechenden Signalisierung 8 detektiert wird, d.h. der angewählte Anschluss belegt ist. Das Kommunikationsendgerät beendet dann das Telefonat ohne Start einer Gebührenerfassung nach einer Überwachungszeit 9.

Figur 7 zeigt den Fall, dass nach Absetzen einer Wahl 10 durch das erfindungsgemäße Kommunikationsendgerät der Zustand "Frei" durch Erfassung von mindestens einer entsprechenden Signalisierung 11 detektiert wird, d.h. der angewählte Anschluss frei ist. Das regelmäßige Eintreffen von "Frei" Signalisierungen 11 wird überwacht, bis das aus einem Sprachfrequenzgemisch bestehende Gespräch begonnen hat. Der Start des Gesprächs und damit der Gebührenermittlung wird durch das Ausbleiben von "Frei" Signalisierungen 11 und gegebenenfalls zusätzlich durch das Auftreten eines Frequenzgemisches erkannt. Schließlich kann das Ende des Gesprächs und damit auch das Ende der Gebührenerfassung 13 durch ein Schaltsignal des Kommunikationsendgerätes erfasst werden, z.B. durch einen sogenannten Gabelumschalter oder eine separate Endetaste.

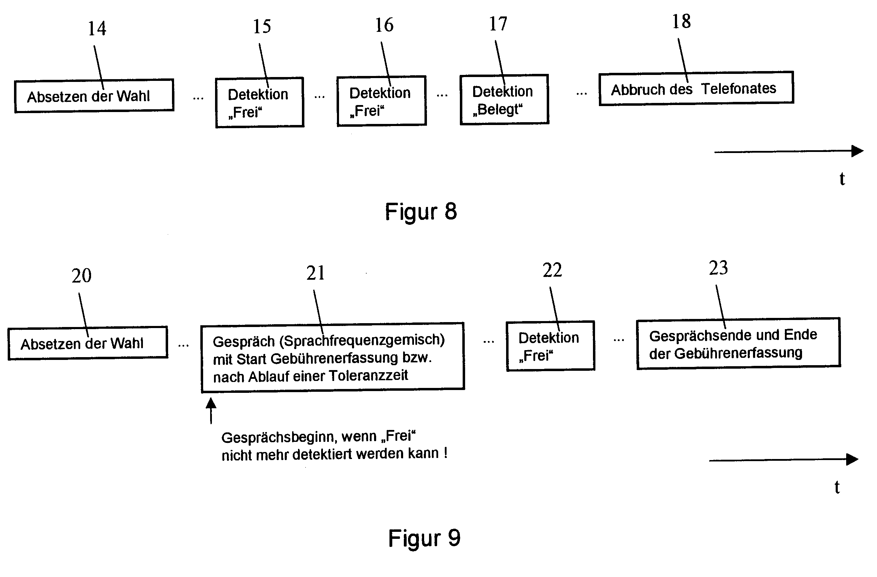

Figur 8 zeigt ebenfalls den Fall, dass nach Absetzen einer Wahl 14 durch das erfindungsgemäße Kommunikationsendgerät der Zustand "Frei" durch Erfassung von beispielhaft zwei entsprechenden Signalisierungen 15 und 16 detektiert wird, d.h. der angewählte Anschluss zunächst frei ist. Im Laufe der weiteren Überwachung wird dann aber mindestens eine "Belegung" Signalisierung 17 detektiert. Das Kommunikationsendgerät erkennt daraufhin das Ende des Telefonats durch ein entsprechendes internes Schaltsignal 18 oder auf Grund der Erfassung der "Belegt" Signalisierung 17 nach einer Überwachungszeit. Auch in diesem Fall wird die interne Gebührenerfassung im Kommunikationsendgerät nicht gestartet.

Figur 9 zeigt schließlich den Fall, dass nach Absetzen der Wahl 20 das Gespräch sofort beginnt und die Gebührenerfassung auch möglichst umgehend gestartet werden muss. Der Gesprächsbeginn kann vom erfindungsgemäßen Kommunikationsendgerät in diesem Fall dadurch erkannt werden, dass entweder das für ein Gespräch typische Sprachfrequenzgemisch oder das Ausbleiben einer "Belegung" Signalisierung oder einer "Frei" Signalisierung nach Ablauf einer Toleranzzeit detektiert wird. Schließlich kann das Ende des Gesprächs und damit auch das Ende der Gebührenerfassung 23 im Beispiel der Figur 9 vom Kommunikationsendgerät durch das erneute Auftreten z.B. einer "Frei" Signalisierung 23 erfasst werden.

**Patentansprüche**

1. Kommunikationsendgerät (6), das zur Abwicklung von Kommunikationsverbindungen an einer Kommunikationsleitung (1) angeschlossen ist, **gekennzeichnet durch**

   a) erste Mittel, welche zumindest eine, den Zustand der Kommunikationsleitung kennzeichnende Signalisierung empfangen,

   b) zweite Mittel, welche aus der mindestens einen Signalisierung den Beginn einer Kommunikationsverbindung detektieren,

   c) dritte Mittel, welche das Ende einer Kommunikationsverbindung detektieren, und

   d) vierte Mittel, welche die durch eine Kommunikationsverbindung verursachten Gebühren ermitteln, indem aus dem Ende und dem Start einer Kommunikationsverbindung deren Dauer bestimmt und mit einer vorgegebenen Gebühreneinheit bewertet wird.

2. Kommunikationsendgerät (6) nach Anspruch 1, **dadurch gekennzeichnet,** dass die dritten Mittel das Ende einer Kommunikationsverbindung durch Auswertung von zumindest einer, den Zustand der Kommunikationsleitung kennzeichnenden Signalisierung detektieren.

3. Kommunikationsendgerät (6) nach Anspruch 1 oder 2, **dadurch gekennzeichnet** , dass die ersten Mittel eine "Belegung" Signalisierung auf der Kommunikationsleitung empfangen.

4. Kommunikationsendgerät (6) nach Anspruch 3, **dadurch gekennzeichnet** , dass ein Nicht Zustandekommen einer Kommunikationsverbindung durch den Empfang einer "Belegung" Signalisierung detektiert wird.

5. Kommunikationsendgerät (6) nach Anspruch 3 oder 4, **dadurch gekennzeichnet** , dass die ersten Mittel das Vorliegen des Zustandes "Belegung" dann erkennen, wenn als Signalisierung ein erster Signalton mit einer ersten Frequenz (f1) für eine erste Zeitdauer (t1) und anschließend ein zweiter Signalton mit einer zweiten Frequenz (f2) für eine zweite Zeitdauer (t2) erfasst werden.

6. Kommunikationsendgerät (6) nach Anspruch 5, **dadurch gekennzeichnet,** dass die zweite Frequenz (f2) des zweiten Signaltons den Wert null aufweist, d.h. eine Frequenzpause darstellt.

7. Kommunikationsendgerät (6) nach Anspruch 5 oder 6, **dadurch gekennzeichnet ,** dass die ersten Mittel das Vorliegen des Zustandes "Belegung" dann erkennen, wenn zusätzlich nochmals ein weiterer Signalton mit der ersten Frequenz (f1) für eine dritte Zeitdauer (t3) erfasst wird.

8. Kommunikationsendgerät (6) nach einem der vorangegangenen Ansprüche, **dadurch gekennzeichnet,** dass die ersten Mittel eine "Frei" Signalisierung auf der Kommunikationsleitung empfangen.

9. Kommunikationsendgerät (6) nach Anspruch 7, **dadurch gekennzeichnet,** dass der Beginn einer Kommunikationsverbindung durch das Ausbleiben einer "Frei" Signalisierung auf der Kommunikationsleitung detektiert wird.

10. Kommunikationsendgerät (6) nach Anspruch 7 oder 8, **dadurch gekennzeichnet ,** dass die ersten Mittel das Vorliegen des Zustandes "Frei" dann erkennen, wenn als Signalisierung ein dritter Signalton mit einer dritten Frequenz (f3) für eine fünfte Zeitdauer (t5) und anschließend ein vierter Signalton mit einer vierten Frequenz (f4) für eine sechste Zeitdauer (t6) erfasst werden.

11. Kommunikationsendgerät (6) nach Anspruch 10, **dadurch gekennzeichnet ,** dass die vierte Frequenz (f4) des vierten Signaltons den Wert null aufweist, d.h. eine Frequenzpause darstellt.

12. Kommunikationsendgerät (6) nach Anspruch 10 oder 11, **dadurch gekennzeichnet ,** dass die ersten Mittel das Vorliegen des Zustandes "Frei" dann erkennen, wenn zusätzlich nochmals ein weiterer Signalton mit der dritten Frequenz (f3) für eine siebte Zeitdauer (t7) erfasst wird.

13. Kommunikationsendgerät (6) nach Anspruch 1, **dadurch gekennzeichnet ,** dass die dritten Mittel das Ende einer Kommunikationsverbindung durch Auswertung von mindestens einem, vom Kommunikationsendgerät (6) selbst erzeugten Schaltsignal detektieren.

4

6

5

2

3

1

Figur 1

6

1

Figur 2

4

6

5

1

Figur 3

Figur 4

Figur 5

EP 1 102 464 A1

7       8       9

| Absetzen der Wahl | ... | Detektion „Belegt" | ... | Abbruch des Telefonates |

t

## Figur 6

10       11       12       13

| Absetzen der Wahl | ... | Detektion „Frei" | ... | Gespräch (Sprachfrequenzgemisch) mit Gebührenerfassung | ... | Gesprächsende und Ende der Gebührenerfassung z.B. über Gabelumschalter |

Gesprächsbeginn, wenn „Frei"
nicht mehr detektiert werden kann !

t

## Figur 7

Absetzen der Wahl — 14

Detektion „Frei" — 15

Detektion „Frei" — 16

Detektion „Belegt" — 17

Abbruch des Telefonates — 18

t

**Figur 8**

Absetzen der Wahl — 20

Gespräch (Sprachfrequenzgemisch) mit Start Gebührenerfassung bzw. nach Ablauf einer Toleranzzeit — 21

Gesprächsbeginn, wenn „Frei" nicht mehr detektiert werden kann !

Detektion „Frei" — 22

Gesprächsende und Ende der Gebührenerfassung — 23

t

**Figur 9**

**Europäisches Patentamt**

## EUROPÄISCHER RECHERCHENBERICHT

Nummer der Anmeldung

EP 99 12 2714

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 404 433 A (WHEELER LEON ET AL) 13. September 1983 (1983-09-13) * Ansprüche 1,3,4,7-11 * --- | 1-13 | H04M15/30 H04M1/82 |
| X | PATENT ABSTRACTS OF JAPAN vol. 013, no. 356 (E-803), 9. August 1989 (1989-08-09) & JP 01 115261 A (NEC CORP), 8. Mai 1989 (1989-05-08) * Zusammenfassung * --- | 1-13 | |
| X | US 4 813 065 A (SEGALA JAMES J) 14. März 1989 (1989-03-14) * Spalte 2, Zeile 66 - Spalte 3, Zeile 32 * --- | 1 | |
| X | US 4 916 733 A (SMITH BENJAMIN A ET AL) 10. April 1990 (1990-04-10) * Spalte 2, Zeile 19 - Zeile 37 * ----- | 1 | |

RECHERCHIERTE SACHGEBIETE (Int.Cl.7)

H04M

Der vorliegende Recherchenbericht wurde für alle Patentansprüche erstellt

| Recherchenort | Abschlußdatum der Recherche | Prüfer |
|---|---|---|
| DEN HAAG | 13. März 2000 | Neves Appelt, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 12 2714

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2000

| Im Recherchenbericht angeführtes Patentdokument | Datum der Veröffentlichung | Mitglied(er) der Patentfamilie | Datum der Veröffentlichung |
|---|---|---|---|
| US 4404433 A | 13-09-1983 | KEINE | |
| JP 01115261 A | 08-05-1989 | KEINE | |
| US 4813065 A | 14-03-1989 | KEINE | |
| US 4916733 A | 10-04-1990 | US 4777647 A<br>US 4942604 A<br>US 4926468 A<br>US 4924497 A<br>US 4926469 A | 11-10-1988<br>17-07-1990<br>15-05-1990<br>08-05-1990<br>15-05-1990 |

EPO FORM P0461

Für nähere Einzelheiten zu diesem Anhang : siehe Amtsblatt des Europäischen Patentamts, Nr.12/82